# NEUE EUROPÄISCHE PATENTSCHRIFT

(11) **EP 3 984 977 B2**
(45) Veröffentlichungstag und Bekanntmachung des Hinweises auf die Entscheidung über den Einspruch: **22.07.2026**
(45) Hinweis auf die Patenterteilung: 09.11.2022
(21) Anmeldenummer: 20202494.9
(22) Anmeldetag: 19.10.2020
(51) Int. Cl.: C04B 11/02, C04B 11/028, C04B 11/26, C04B 28/14

(54) **VERFAHREN ZUM RECYCLING VON GIPSKARTONMATERIAL**
METHOD FOR RECYCLING GYPSUM WALLBOARD MATERIAL
PROCÉDÉ DE RECYCLAGE DE PANNEAU DE PLÂTRE

(43) Veröffentlichungstag der Anmeldung: 20.04.2022
(73) Patentinhaber: Lindner NORIT GmbH & Co. KG, 97337 Dettelbach (DE)
(72) Erfinder: Koch, Philipp, 97355 Kleinlangheim (DE); Michel, Andreas, 97255 Sonderhofen (DE); Aschern, Winfried, 97332 Volkach (DE); Kang, Nathan, 97074 Würzburg (DE)
(74) Vertreter: Lindner Blaumeier Patent- und Rechtsanwälte

(56) Entgegenhaltungen:
- EP-A1- 2 305 605
- EP-A2- 1 928 803
- EP-A2- 2 418 184
- EP-B1- 2 305 605
- EP-B2- 2 418 184
- WO-A1-00/59698
- WO-A1-2012/098112
- CN-A- 106 076 539
- CN-U- 206 986 592
- JP-A- 2001 122 645
- JP-A- 2004 307 321
- JP-A- 2006 161 221
- JP-A- 2006 273 599
- JP-A- 2017 137 208
- JP-B2- 4 371 801
- JP-B2- 4 960 600
- JP-B2- H0 725 583
- SU-A1- 1 576 506
- US-A- 5 558 710
- US-A1- 2004 182 286
- US-A1- 2005 161 853
- US-A1- 2015 376 063
- US-B1- 6 435 770
- US-B2- 9 963 391
- J.M.P.Q. DELGADO: "Hygrothermal Behaviour and Building Pathologies", 1 January 2020, SPRINGER CHAM, ISBN: 978-3-030-50997-2, article AZEVEDO, A C, J. M. P. Q. DELGADO, T. H. C. NEVES, A. J. COSTA E SILVA: "Adhesion of Gypsum Plaster Coatings: Experimental Evaluation", pages: 46 - 49, XP093101721, DOI: 10.1007/978-3-030-50998-9
- a or 3?-hemihydrates transformed from dihydrate calcium sulfate in a salt-mediated glycerol-water solution, Shishi Yin, Liuchun Yang

## Beschreibung

Die Erfindung betrifft ein Verfahren zum Recycling von Calciumsulfat-Dihydrat enthaltendem Gipskartonmaterial.

Gips ist die mineralogisch-technische Bezeichnung der chemischen Verbindung Calciumsulfat-Dihydrat (CaSO₄ x 2H₂O). Durch thermische Behandlung lässt sich der Gips in Calciumsulfat-Halbhydrat (CaSO₄ x 1/2 H₂O) überführen, wobei das Calciumsulfat-Dihydrat Teile seines gebundenen Kristallwassers verliert. Calciumsulfat-Halbhydrat besitzt die Eigenschaft, dass es bei Temperaturen unterhalb der Umwandlungstemperatur, bei Anwesenheit von Wasser, zu einer festen Masse erstarrt, wobei es sich um die Rückreaktion zu Calciumsulfat-Dihydrat handelt. Dies ist die Grundlage für vielfältige Anwendungen.

Calciumsulfat-Halbhydrat ist in zwei chemisch-mineralogisch identischen Formen, nämlich der alpha- und der beta-Form bekannt, wobei die Formen durch die physikalischen Eigenschaften unterscheidbar sind. So ist Calciumsulfat-alpha-Halbhydrat geringer in Wasser lösbar, zeigt unter dem Mikroskop gut ausgebildete Kristalle und benötigt weniger Mischungswasser, um eine bearbeitbare Gipsmischung zu bilden. Die beta-Form des Halbhydrats wird auch als Stuckgips bezeichnet.

Als Rohstoff zur Herstellung von Calciumsulfat-alpha-Halbhydrat, welches auch als abbindefähiger Gips bezeichnet wird, werden üblicherweise Naturgips oder technischer Gips, welcher in technischen Prozessen als Nebenprodukt anfällt, verwendet. Der bedeutendste technische Gips ist der Rauchgas-Entschwefelungs-Anlagen-Gips (REA-Gips). Neben technischen Gipsen und Naturgipsen können auch Chemiegipse verwendet werden. Chemiegipse sind Nebenprodukte aus der Herstellung von Phosphorsäure, Zitronensäure oder auch Titandioxid und werden dementsprechend als Phosphorsäuregips, Zitronensäuregips und Titandioxidgips bezeichnet.

Die beschlossene Energiewende bewirkt die kurz- bis mittelfristig absehbare Abschaltung der Kohlekraftwerke, wodurch große Mengen an REA-Gipsen, die bislang von der Gipsindustrie sinnvoll verwertet wurden, wegfallen. Somit steigt die Nachfrage nach Naturgips und Chemiegips, wobei allerdings bei den Chemiegipsen die anfallenden verwertbaren Mengen deutlich geringer als beim REA-Gips sind und auch der Naturgips die wegfallenden Mengen nicht kompensieren kann, da die Lagerstätten, beispielsweise in Deutschland, nicht ausreichend sind, die Erschließung neuer Gipslagerstätten aufwändig ist und auch genehmigungsrechtliche Probleme auftreten können. Mithin wird Gips zu einem knapperen Rohstoff.

Parallel zu dieser Entwicklung steigen die Kosten für die Entsorgung von Gipsabfällen kontinuierlich. Besonders davon betroffen sind die in großen Mengen anfallenden Gipskartonplattenabfälle. Gipskarton besteht zu ca. 94 Gew.-% aus einem Gipskern und zu ca. 6 Gew.-% aus Karton, welcher den Gipskern beidseitig kaschiert. Dabei können beispielsweise Gipskartonplattenabfälle aus der Herstellung und Verarbeitung in den Werken, aus der Verarbeitung auf den Baustellen und aus der Renovierung oder dem Abbruch von Gebäuden unterschieden werden. In der Herstellung und Verarbeitung sind dabei Ausschussproduktionen in den Gipskartonwerken, Schnitt- und Stanzreste, die bei der Konfektionierung von Gipskartonplatten anfallen (beispielsweise bei der Herstellung von gelochten Akustikplatten) zu nennen. Derartige Gipskartonplattenabfälle sind üblicherweise sauber und fremdstofffrei. Auf Baustellen entstehen Gipskartonplattenabfälle aufgrund von Plattenbruch, beispielsweise durch falsche Behandlung oder Lagerung, was auch im Baumarkt/Baufachhandel vorkommen kann, sowie hauptsächlich durch Zuschnittreste. So ist auf Baustellen typischerweise von wenigstens 5 % Schnittabfällen auszugehen. Hinsichtlich der Renovierung und dem Abbruch von Gebäuden sind die aus dem Bestand anfallenden Gipskartonplattenabfälle zu nennen. Das Material ist sowohl bezüglich der Zusammensetzung als auch der unerwünschten Fremdstoffe im Vergleich zu den vorher genannten Abfällen undefinierter. Beispielsweise können an Gipskartonplatten beim Gebäudeabbruch oder bei der Sanierung Fliesen, Holzplatten, Reste von Ständerwänden sowie deren Befestigung, beispielsweise Schrauben oder Nägel, und andere Gebäudereste haften.

Im Stand der Technik wurden bereits verschiedene Ansätze zum Recycling von Gipskartonmaterial, insbesondere Gipskartonplattenabfällen, vorgeschlagen. Dabei wird üblicherweise in einem ersten Schritt der Karton mechanisch von dem Gipskern getrennt. Der Gipskern wird mechanisch in mehreren Stufen zerkleinert und zwischendurch klassiert, wobei der vom Gips weitestgehend befreite Karton beispielsweise durch Siebe separiert wird. Der Gipsanteil weist typischerweise noch einen Anteil von ca. 0,5 bis 2 Gew.-% Papierfaser auf. Die Korngröße des Gipses beträgt je nach Anlage zwischen ein Millimeter bis zu Zentimetern. Dabei sind sowohl mobile als auch stationäre Anlagen bekannt.

Diese Anlagen haben jedoch den Nachteil, dass die mechanische Trennung und die Aufbereitung aufwändig sind. Der Platzbedarf ist groß. Fremdstoffe führen häufig zu Störungen und entsprechende Platten müssen per Hand aussortiert werden. Die Aufbereitung ist aufgrund der trockenen, mechanischen Trennung und Zerkleinerung mit großer Staubentwicklung verbunden, weshalb Kapselungen der Anlagenkomponenten und zusätzliche Absauganlagen und Filter erforderlich sind. Nasse Gipskartonplattenabfälle verursachen bei diesem Recyclingvorgang Probleme, nachdem der feuchte Gips bewirken kann, dass sich die Trenn- und Sortierkomponenten zusetzen. Dazu kommt, dass nasser Gips nicht oder nur mit den größten Problemen im Silo zu handhaben ist und für die nachfolgende Kalzinierung problematisch ist.

Der nach solchen Verfahren mechanisch aufbereitete Recycling-Gips wird häufig zur Verwertung in Gipskartonplattenanlagen eingesetzt. Dazu wird der Gips in herkömmlichen Kalzinieranlagen, beispielsweise Drehöfen und/oder Luftstromkalzinierern, zu Stuckgips kalziniert und mit den weiteren Gipsrohstoffen verschnitten. Der Anteil des so kalzinierten Recyclingmaterials in einer Mischung zur Herstellung von Gipskartonplatten ist limitiert, da der Gips aus dem Gipskartonplatten-Recycling deutlich kleinere Kristalle und eine deutlich höhere Oberfläche aufweist und damit einen signifikant höheren Wasseranspruch aufweist als üblicherweise eingesetzter REA-Gips oder Naturgips. Dieser Effekt bleibt nach der Kalzinierung zu Stuckgips erhalten und wird durch Kornzerfall bei der Kalzinierung und der anschließenden Verarbeitung teilweise noch verschlechtert.

Der hohe Wasseranspruch des kalzinierten Recycling-Stuckgipses bewirkt bei der Verarbeitung zu Gipskartonplatten, dass mehr Wasser im Gipskern gebunden wird und damit mehr Wasser auszutrocknen ist. Somit ist eine höhere Trocknerleistung im Vergleich zur Verwendung von nicht recyceltem Stuckgips erforderlich, verbunden mit längeren Trocknern und höherer erforderlicher Trocknungsenergie. Aufgrund der höheren gebundenen Wassermenge stellt sich dann im Gipskern eine höhere Porosität ein, wodurch der Gipskern eine schlechtere Festigkeit aufweist.

Zusammenfassend ist also festzuhalten, dass die Verwertung von Gipsen aus dem heutigen Gipskartonrecycling mit großen Nachteilen behaftet ist und die Verwertungsquote auf maximal 30 % bezogen auf den gesamten Gipsanteil limitiert ist (vgl. hierzu auch "Ökobilanzielle Betrachtung des Recyclings von Gipskartonplatten", Forschungskennzahl 3715 343200, Texte 33/2017, Umweltforschungsplan des Bundesministeriums für Umwelt, Naturschutz, Bau und Reaktorsicherheit. UBA-FB 002501). Dies betrifft auch den Einsatz eines so aufbereiteten Gipses aus dem Gipskartonrecycling bei der Herstellung von Gipsfaserplatten, die bei der Produktion entwässert werden müssen.

Ein weiterer Nachteil der herkömmlichen Gipskartonrecyclingverfahren ist die schlechte Verwertbarkeit der bei dem Recycling abgetrennten Kartonabfälle. In der Papierindustrie sind diese Kartonabfälle unerwünscht, da Gipsanhaftungen aufgrund der dadurch erzeugten sulfathaltigen Eluate für den Wasserkreislauf einer Papieranlage problematisch sind. Aufgrund der Sulfatbelastung ist auch eine Verwendung in Müllverbrennungsanlagen und als Ersatzbrennstoff bei der Zementherstellung unerwünscht.

JP 2004307321 A offenbart ein Verfahren zum Recycling von Calciumsulfat-Dihydrat enthaltendem Gipskartonmaterial, wobei das Gipskartonmaterial ohne vorherige Zerkleinerung oder Sortentrennung in Wasser eingebracht und dann mit Temperatur und Druck beaufschlagt wird. Im Zuge dieser Beaufschlagung wandelt sich erstens Dihydrat in alpha-Hydrat um, zweitens löst sich der stärkehaltige Klebstoff auf und drittens trennt sich das Papier bzw. der Karton vom Gips. Das Papier bzw. der Karton wird von der alpha-Hydratsuspension abgetrennt; sowohl alpha-Hydrat als auch Papier bzw. Karton werden getrennt wiederverwertet.

Seitens der Anmelderin wurde auch eine Verwertung der Kartonabfälle bei der Produktion von Gipsfaserplatten erfolglos geprüft. Zur Verwertung in Gipsfaserplattenanlagen, bei denen die Gipsfaserplatten im nassen Verfahren hergestellt werden, wird der Karton in Wasser zu einem Faserbrei gelöst, danach mit Additiven und dem abbindefähigen Gips gemischt und dann entwässert. Hierbei tritt allerdings das Problem auf, dass der Karton aus dem GipskartonRecycling undefinierte Mengen an Gipsanhaftungen aufweist, die aufgrund der hohen Feinheit und der mechanischen Aktivierung durch den Recyclingprozess sehr reaktive Kristallisationskeime für die Reaktion von Calciumsulfat-Halbhydrat zu Calciumsulfat-Dihydrat sind. Mithin findet eine unkontrollierte Beschleunigung der Umwandlung von Calciumsulfat-Halbhydrat zu Calciumsulfat-Dihydrat statt, was zu einer undefinierten und zu schnellen Reaktion des Aushärtens der Gipsfasermischung führt. Dies beeinflusst den Produktionsprozess auch bei sehr hohen Dosierungen von Abbindeverzögerern nachteilig, so dass eine prozesssichere Produktion nicht möglich wird. Mithin ist eine sinnvolle Verwertung in der Gipsfaserplattenproduktion für Kartonabfälle nicht umsetzbar.

Der Erfindung liegt daher die Aufgabe zugrunde, eine demgegenüber verbesserte, insbesondere eine hochwertige und gleichzeitig einfache Verwertung erlaubende, Vorgehensweise zum Recycling von Gipskartonmaterial, insbesondere Gipskartonplattenabfällen, anzugeben.

Zur Lösung dieser Aufgabe ist ein Verfahren mit den Merkmalen des Anspruchs 1 vorgesehen. Vorteilhafte Weiterbildungen ergeben sich aus den abhängigen Ansprüchen.

Entsprechend umfasst ein erfindungsgemäßes Verfahren zum Recycling von Calciumsulfat-Dihydrat enthaltendem Gipskartonmaterial folgende Schritte:
- Einbringen des Gipskartonmaterials gemeinsam mit Wasser in ein Nasslöseaggregat, nämlich einen Pulper, und Auflösen des Gipskartonmaterials in dem Nasslöseaggregat zum Erzeugen einer Gipsfasersuspension, und
- Umwandlung des Calciumsulfat-Dihydrats der Gipsfasersuspension zu Calciumsulfat-alpha-Halbhydrat in einem Druckbehälter.

Die entstehende Alpha-Halbhydrat-Gipsfasersuspension kann dann beispielsweise einem Prozess zur Herstellung von Gipskartonplatten und/oder Gipsfaserplatten zugeführt werden oder, insbesondere nach einem Abkühl- und/oder Entwässerungs- und/oder Trocknungsvorgang, zur späteren Verwendung gelagert werden.

Im Rahmen der vorliegenden Erfindung wurde überraschend festgestellt, dass bekannte Nasslöseaggregate aus der Papierindustrie, beispielsweise im Gegensatz zu Nassmischern, hervorragend geeignet sind, um eine Gipsfasersuspension zu schaffen, welche aufgrund geringer Korngrößen des darin dann enthaltenen Calciumsulfat-Dihydrats auf einfache Weise weiterverarbeitbar ist, um hochwertiges Calciumsulfat-alpha-Halbhydrat in einem Nassverfahren zu erhalten. Hierzu wird das Gipskartonmaterial mit Wasser in einem Pulper gelöst und zerkleinert. Zu diesem Zweck weisen Pulper, bzw. Nasslöseaggregate der Papierindustrie im Allgemeinen, üblicherweise wenigstens eine Rühreinrichtung auf, die den Vorgang unterstützt. Am Ende des Auflösevorgangs liegt dann ein pumpbarer Gipsfaserbrei, nämlich die Gipsfasersuspension, aus im Wasser vereinzelten Kartonfasern und zerkleinertem Gips, insbesondere mit Korngrößen kleiner als 10 mm, vor. Das Calciumsulfat-Dihydrat der so erzeugten Gipsfasersuspension kann dann in herkömmlichen Druckbehältern, bevorzugt Druck-Rührbehältern, bei üblichen thermischen Bedingungen und gegebenenfalls mit bekannten Additivzusätzen zu Calciumsulfat-alpha-Halbhydrat umgewandelt werden. Dabei hat sich mit besonderem Vorteil herausgestellt, dass nach der Behandlung und Umwandlung in dem Druckbehälter die zuvor noch groben Bestandteile des Gipses aus dem Gipskartonmaterial zerkleinert und fein dispergiert vorliegen. Das bedeutet, die Umwandlung zu alpha-Halbhydrat bewirkt, dass sich der grobkörnige Bestandteil in Kristallen oder Kristallagglomeraten in Körner deutlich kleiner als 1 mm zerlegt.

Die so entstandene Gipsfasersuspension mit Calciumsulfat-alpha-Halbhydraten eignet sich zur direkten Weiterverarbeitung alleine oder in Mischungen mit Fasern und weiteren Gipsen/Additiven zu Gipskartonplatten oder zu Gipsfaserplatten. Alternativ oder zusätzlich ist auch eine Abtrennung der wässrigen Phase der alpha-Halbhydratsuspension mit anschließender Trocknung der Feststoffe möglich.

Auf diese Weise werden bewährte und robuste Anlagenkomponenten, insbesondere teilweise aus der Papierindustrie, eingesetzt, um eine hochwertige und gleichzeitig einfache Verwertung von zu recycelndem Gipskartonmaterial zu ermöglichen. Dabei kann das Gipskartonmaterial insbesondere Gipskartonplattenabfälle umfassen. Gipskartonplattenabfälle können beispielsweise aus der Herstellung und Verarbeitung beim Hersteller, von der Verarbeitung auf einer Baustelle und/oder aus der Renovierung und/oder dem Abbruch von Gebäuden stammen.

Das erfindungsgemäße Vorgehen erlaubt die vollständige Verwertung von Gips und Karton in einem Gipsprodukt, mithin eine Kreislaufschließung, wobei insbesondere auch der bisher nicht verwertbare, mit Calciumsulfat behaftete Karton des Gipskartonmaterials in einem Gipsprodukt hochwertig verwertet wird. Anstelle von mehreren Zerkleinerungs- und Fraktionierkomponenten beim Recycling nach dem Stand der Technik, also der trockenen, mechanischen Zerlegung, ist vorzugsweise nur eine Auflösungsstufe erforderlich, die sowohl den Gips zerkleinert als auch den Karton zerfasert. Der Platzbedarf und der maschinelle Aufwand sind somit gering, da nur wenige Anlagenkomponenten benötigt werden. Aufgrund der Nassbehandlung ist der Prozess weitestgehend staubfrei und kann ohne Installation von Filter- und Absaugeinrichtungen erfolgen. Die Vorgehensweise erlaubt zudem auch das Recycling von durchfeuchteten Gipskartonmaterialien, die bisher dem Trockenrecycling des Standes der Technik nicht zugänglich waren.

Zusammenfassend werden also sowohl der Gipskern als auch der in der Gipsindustrie bislang nicht verwertbare Karton aus dem Gipskartonmaterial ökonomisch und prozesssicher aufbereitet und wiederverwertet. Die Fasern aus dem Karton können dann einen Bestandteil der Armierung des daraus erzeugten Gipsproduktes werden. Der Gips ist für eine Verwertung in der Gipsindustrie unmittelbar geeignet. Dies gilt insbesondere für eine Verwertbarkeit in der Gipsfaserplattenproduktion, wobei die für ein nasses Verfahren erforderliche schnelle Entwässerbarkeit im Rahmen der vorliegenden Erfindung bereitgestellt wird, wie noch genauer dargelegt werden wird.

Dabei sei an dieser Stelle noch angemerkt, dass durch die Umwandlungsbedingungen der Gipsfasersuspension im Druckbehälter bei Temperaturen insbesondere größer oder gleich 120°C auch mikrobiologisch verunreinigtes Gipskartonmaterial, z.B. durch lange Lagerung mit hoher Feuchte verursacht, sterilisiert wird und damit bedenkenlos im Bauprodukt wiederverwertet werden kann.

Insbesondere ist zur Umwandlung des Calciumsulfat-Dihydrats der Gipskartonsuspension zu Calciumsulfat-alpha-Halbhydrat im Druckbehälter anzumerken, dass hier herkömmliche Vorgehensweisen, mithin Nassverfahren, eingesetzt werden können. Insbesondere kann vorteilhaft ein Druck-Rührbehälter als Druckbehälter verwendet werden. Der Umwandlungsschritt umfasst dabei das Erhitzen der Gipsfasersuspension in dem Druckbehälter und das Halten der erhitzten Gipsfasersuspension auf der Erhitzungstemperatur, wobei das enthaltene Calciumsulfat-Dihydrat in Calciumsulfat-alpha-Halbhydrat umgesetzt wird. Die Erhitzung der Gipsfasersuspension erfolgt insbesondere auf eine Erhitzungstemperatur im Bereich von 105 bis 150°C, insbesondere im Bereich von 105 bis 135°C, bevorzugt 120°C bis 125°C. Selbstverständlich sind auch Ausnahmen nach oben oder nach unten denkbar. Die Haltezeit zur Durchführung der Umsetzung in Calciumsulfat-alpha-Halbhydrat kann im Bereich von 1 bis 90 Minuten, insbesondere 1 bis 60 Minuten, bevorzugt 1 bis 45 Minuten, liegen. Der Dampfdruck wird dabei entsprechend der Temperatur gewählt. Bei ausreichendem Energieeintrag entsprechend der für die Umwandlung benötigten Energie ist die Umwandlung bereits nach sehr kurzen Haltezeiten, beispielsweise 8 bis 12 Minuten, insbesondere 10 Minuten, nach dem Erreichen der Erhitzungstemperatur, beispielsweise 120 bis 125°C, bevorzugt 125°C, abgeschlossen. Das ursprünglich vorhandene Calciumsulfat-Dihydrat ist nach der Umwandlung vollständig zu Calciumsulfat-alpha-Halbhydrat umgesetzt, auch der an den Kartonfasern anhaftende Feststoff.

In einer zweckmäßigen Weiterbildung der Erfindung wird das Gipskartonmaterial derart gravimetrisch in das Nasslöseaggregat eingebracht, dass sich eine Mischung aus 30 bis 60 Gew.-% Gipskartonmaterial mit 40 bis 70 Gew.-% Wasser ergibt. Beispielsweise kann in einer konkreten Ausführungsform das Nasslöseaggregat, also der Pulper, mit einer Wasservorlage gefüllt werden, wonach das Gipskartonmaterial gravimetrisch in den Pulper dosiert wird. Hierzu kann beispielsweise ein Plattenwiegeband verwendet werden. Danach wird eine Rühreinrichtung (Rotor) des Pulpers zugeschaltet.

Dabei hat sich gezeigt, dass ein hoher Feststoffgehalt für einen hohen Durchsatz und einen geringen Energieverbrauch von Vorteil ist. Bei einer Mischung aus 50 Gew.-% Gipskartonmaterial und 50 Gew.-% Wasser stellt sich ein besonders gutes Ergebnis ein.

Die Lösezeit kann vorzugsweise 10 bis 20 Minuten, bevorzugt 14 bis 16 Minuten, betragen. Es hat sich gezeigt, dass unabhängig vom verwendeten Pulpertyp nach etwa 15 Minuten Lösezeit ein pump- und fließfähiger Gipsfaserbrei als Gipsfasersuspension vorliegt, der aus nahezu vollständig vereinzelten Fasern und Gips mit Korngrößen von typischerweise kleiner als 1 mm bis zu ca. 10 mm besteht. Je größer der Feststoffgehalt, umso besser die Zerkleinerung des Gipses. So hat sich gezeigt, dass sich beispielsweise bei 50 Gew.-% Feststoff eine deutlich bessere Zerkleinerung als bei 30 Gew.-% Feststoff ergibt. Insbesondere wirkt sich die Reibung der Gipskartonplatten untereinander im Löseprozess günstig aus.

Bei einem Feststoffgehalt von 50 Gew.-% liegt auch noch ein gut pumpfähiges Material vor. Eine Auflösung ist bis zu ca. 60 Gew.-% Gipskartonmaterial möglich, wofür allerdings eine längere Lösezeit erforderlich sein kann. Der maximal mögliche Feststoffgehalt ist auch abhängig vom Anteil Karton zu Gips in dem Gipskartonmaterial. Das Verhältnis kann abhängig vom Plattentyp und der Plattendicke geringfügig schwanken. Eine gleichmäßige Umwälzung des Materials in dem Nasslöseaggregat hat sich als wichtig erwiesen. Ist diese visuell bzw. anderweitig überprüft nicht gegeben, kann beispielsweise der Feststoffanteil reduziert werden. Dabei sei angemerkt, dass abhängig von der Weiterbehandlung der Feststoffgehalt der Gipsfasersuspension durch Zugabe von Wasser nach dem Ende der Lösezeit selbstverständlich weiter auf einen gewünschten Wert reduziert werden kann.

Als Nasslöseaggregat kann grundsätzlich ein Niederkonsistenz-Pulper, ein Mittelkonsistenz-Pulper oder ein Hochkonsistenz-Pulper (HC-Pulper) verwendet werden, wobei die Verwendung eines Hochkonsistenz-Pulpers bevorzugt ist. Hochkonsistenz-Pulper werden in der Papierindustrie beispielsweise bei Faseranteilen von 10 bis 15 % eingesetzt, wobei sich gezeigt hat, dass im Rahmen der vorliegenden Erfindung Feststoffanteile von bis zu 60 % durch einen solchen Hochkonsistenz-Pulper bearbeitet werden können.

Pulper der Papierindustrie umfassen üblicherweise ein Rührgefäß (einen Rührbottich), in dem eine Rühreinrichtung (Rührwerk) angeordnet ist, deren Rotorwelle horizontal oder vertikal verlaufen kann. Mithin kann gesagt werden, ein Pulper funktioniert wie ein übergroßer Mixer mit einem kräftigen und effektiven Rührwerk. Dieses Rührwerk bzw. die Rühreinrichtung umfasst üblicherweise einen Rotor als in Kontakt mit den zu verrührenden Stoffen stehenden Aktor.

Dabei kann es im Rahmen der vorliegenden Erfindung, insbesondere bei der Verwendung eines Niederkonsistenz-Pulpers und/oder eines Mittelkonsistenz-Pulpers, vorgesehen sein, dass eine Zerkleinerungszähne aufweisende Rühreinrichtung in dem Nasslöseaggregat verwendet wird. Derartige, insbesondere scharfe, Zerkleinerungszähne, insbesondere an dem Rotor, unterstützen die Zerfaserung des Kartonanteils, wobei es sich gezeigt hat, dass dies in einem Hochkonsistenz-Pulper nicht erforderlich ist.

Mit einem Hochkonsistenz-Pulper eines Fassungsvermögens von 20 Kubikmetern lassen sich bei 50 Gew.-% Gipskartonmaterial, einer Lösezeit von 15 Minuten und einer Beschickungs- und Ableerzeit von in Summe 15 Minuten ca. 20 Tonnen je Stunde Gipskartonmaterial lösen. Ein solcher Hochkonsistenz-Pulper mit einem Fassungsvermögen von 20 Kubikmetern kann typischerweise für die Rühreinrichtung eine installierte Leistung von 315 kW aufweisen und eine Leistungsaufnahme von ca. 220 kW besitzen. Bei dem genannten Durchsatz ergibt sich dabei ein elektrischer Energiebedarf von 11 kWh je Tonne Gipskartonmaterial. Schon mit einem nur halb so großen Pulper mit 10 Kubikmetern Nutzvolumen ergibt sich bei 7200 Betriebsstunden pro Jahr ein Durchsatz von 72000 Tonnen Gipskartonmaterial pro Jahr, wobei dieser Durchsatz im Bereich der Leistung herkömmlicher, trockener Gipskartonrecyclinganlagen liegt, die beispielsweise 50000 Tonnen Gipskartonabfälle pro Jahr durchsetzen können.

Wird ausschließlich störstofffreies Gipskartonmaterial verwendet, sind keine weiteren Aggregate zur Störstoffabtrennung notwendig, so dass die Gipsfasersuspension unmittelbar oder nach wenigstens einem optionalen Vorverarbeitungsschritt zur Umwandlung weitergefördert werden kann. In diesem Fall kann die Abzugsöffnung für die Entleerung der Suspension ohne Sieb im Pulperboden ausgeführt sein. Sind Störstoffe vorhanden, ist die Verwendung eines Siebbodens in der Abzugsöffnung denkbar, beispielsweise mit einer Maschenweite von 20mm zur Abtrennung von groben Störstoffen.

Bei einem wenigstens einen Störstoff enthaltenden Gipskartonmaterial sieht die vorliegende Erfindung in bevorzugter Ausgestaltung vor, dass die Gipsfasersuspension aus dem Nasslöseaggregat durch wenigstens einen Störstoffabscheider geführt wird. Dies gilt insbesondere bei störstoffhaltigen Gipskartonabfällen aus der Renovierung und/oder dem Abbruch von Gebäuden, kann jedoch in einzelnen Fällen auch bei Gipskartonabfällen von Baustellen der Fall sein. In diesem Zusammenhang wurde im Rahmen der vorliegenden Erfindung auch hier überraschend erkannt, dass sich mit besonderem Vorteil bekannte Störstoffabscheider aus der Papierindustrie einsetzen lassen. Störstoffe unterscheiden sich durch ihre Abmessung und/oder durch ihr spezifisches Gewicht von dem Gutstoff, also der gelösten Gipsfasersuspension. Dementsprechend kann die Abtrennung solcher Störstoffe durch Siebe und gravimetrische Trennung erfolgen.

In der Papierindustrie werden für die Grobabreinigung häufig Pulper mit einem Siebboden, über den der Gutstoff abgezogen wird, verwendet, in Kombination mit einem nachfolgenden Scheibensortierer, umfassend aus einem Sieb und einen Rotor, welcher eine Pumpwirkung hat und gleichzeitig das Sieb für die Grobabscheidung der Störstoffe freihält. Die Scheibensortierer werden auch als Sekundärpulper oder Rejectsorter bezeichnet und trennen den größten Teil der Verschmutzungen ab. Solche Scheibensortierer können aber auch in Kombination mit einem Pulper ohne Siebboden eingesetzt werden.

Die weitere gravimetrische Abscheidung der Störstoffe kann über Dichtesortierer, auch Schwerstoffabscheider (oder Hydrozyklon oder MC-Cleaner) genannt, erfolgen. In diesen Geräten werden Störstoffe abgeschieden, die schwerer als die Fasern sind.

Weiterhin werden für die nach der Grobsortierung übriggebliebenen Störstoffe Zylindersortierer verwendet, welche aus einen Siebkorb und einen rotierenden Flügelrotor umfassen können. Die Siebe des Siebkorbs können als Loch- oder Schlitzsiebe ausgeführt sein. Typische Lochweiten sind 1 bis 2 mm bei Lochsieben und 0,1 bis 0,5 mm bei Schlitzsieben. Diese Zylindersortierer werden auch als Drucksortierer bezeichnet.

Die nach dem Abzug aus dem Pulper aufgeführten Störstoffabscheider werden typischerweise bei der Aufbereitung von Altpapier mit einem Feststoffgehalt von 3 bis 7% betrieben.

Im Rahmen der vorliegenden Erfindung können diese Konzepte vorteilhaft ebenso eingesetzt werden. Konkret kann bei einer störstoffhaltigen Gipsfasersuspension beispielsweise vorgesehen sein, dass der wenigstens eine Störstoffabscheider aus der Gruppe umfassend einen Scheibensortierer (für die Abscheidung von grobem Schmutz, z.B. einen Rejectsorter), einen Schwerstoffabscheider (Hydrozyklon) und einen Zylindersortierer (Drucksortierer, für die Abscheidung von feinerem Schmutz) gewählt ist. Dabei kann die Verwendung von Störstoffabscheidern in Form von einem Scheibensortierer mit wenigstens einem Rotor und wenigstens einem Sieb besonders vorteilhaft sein, da sich gezeigt hat, dass eine derartige Sieb-Rotor-Kombination auch zusätzlich auf größere Gipskörner zerkleinernd wirkt. Mit anderen Worten kann vorgesehen sein, dass wenigstens einer des wenigstens einen Störstoffabscheiders ein zusätzlich größere Gipskörner zerkleinerndes Sieb mit Rotor umfasst. Allerdings kann es bei Störstoffen, die derartige Siebe zuzusetzen drohen, auch zweckmäßig sein, alternativ oder zusätzlich Störstoffabscheider zu verwenden, die wenigstens eine Waschtrommel aufweisen.

Der Scheibensortierer kann mit austauschbaren Siebweiten ausgeführt sein. Beispielsweise können hier je nach Zweckmäßigkeit Siebe mit Maschenweiten von 7 mm und/oder 10 mm und/oder 15 mm eingesetzt werden. Insbesondere bei Sieben einer Maschenweite von 10 mm hat sich der vorteilhafte Effekt der weiteren Zerkleinerung von gröberen Gipskörnern bei gleichzeitig wirksamer Abtrennung von Störstoffen, die größer als 10 mm sind, gezeigt.

Für eine wirksame Abscheidung der Störstoffe hat es sich im Fall der Gipsfasersuspension als sinnvoll erwiesen, einen Feststoffgehalt von 10 bis 25 Gew.-% einzustellen. Dadurch wird das Risiko reduziert, dass mehr Gutstoff mit den Störstoffen ausgeschieden wird und die Effektivität verschlechtert wird. Mithin sieht eine zweckmäßige Weiterbildung vor, dass die Gipsfasersuspension vor dem Durchlauf durch den wenigstens einen Störstoffabscheider auf einen Feststoffgehalt von 10 bis 25 Gew.-% verdünnt wird.

Eine konkrete, zweckmäßige Weiterbildung der vorliegenden Erfindung kann beispielsweise vorsehen, dass zur Störstoffabscheidung in einer ersten Stufe in einem Scheibensortierer mit einem Sieb und/oder einer Waschtrommel Störstoffpartikel größer als 10 mm entfernt werden, wobei in einer zweiten Stufe Schwerteile des Störstoffs durch einen Schwerstoffabscheider, insbesondere den Hydrozyklon, entfernt werden und in einer dritten Stufe mittels eines bzw. des Zylindersortierers Störstoffpartikel größer als 2 mm entfernt werden. Eine weitere Abtrennung von feineren Störstoffen durch Drucksortierer mit anderen Maschenweiten der Siebe hat sich für die weiteren Prozesse als nicht unbedingt erforderlich erwiesen. Mithin kommt als Störstoffabscheider in einer ersten Stufe mit besonderem Vorteil ein Scheibensortierer mit variablen Siebweiten, beispielsweise unter Einsatz einer Siebweite von 10 mm, in Frage, um grobe Störstoffe abzutrennen. Dabei kann das vorgeschaltete Nasslöseaggregat, also der Pulper, einen Siebboden, bevorzugt mit einer Maschenweite von 20 mm, aufweisen, der Abzugsboden kann aber auch offen sein. Bei problematischen Störstoffen, zum Beispiel zum Aufrollen neigenden, feinen Kunststofffolien, die zum Zusetzen/Zuschmieren der Sieblochung neigen, ist eine Waschtrommel besser geeignet. Eine Abtrennung von Schwerteilen, die schwerer als der Gips und die Fasern sind, kann in einer zweiten Stufe beispielsweise durch einen Schwerstoffabscheider erfolgen. In einer weiteren, dritten Stufe können dann mit einem Drucksortierer, falls erforderlich, Störstoffe mit einem Sieb reduzierter Maschenweite, beispielsweise 2 mm, aussortiert werden. Dies alles sind robuste und bewährte Anlagenkomponenten aus der Papierindustrie, die im Rahmen der vorliegenden Erfindung einer neuen, vorteilhaften Anwendung zugeführt werden können.

Nachdem nach der Behandlung in dem Nasslöseaggregat, also dem Pulper, üblicherweise bereits Korngrößen, die kleiner als 10 mm sind, vorliegen bzw. die Lösezeit entsprechend gewählt ist, kann die Gipsfasersuspension grundsätzlich, gegebenenfalls nach Durchlaufen des wenigstens einen Störstoffabscheiders, unmittelbar der Umwandlung zugeführt werden. Nichts desto trotz kann es in manchen Anwendungsfällen, beispielsweise wenn geringere Korngrößen für das Umwandlungsverfahren zweckmäßiger sind, sinnvoll sein, die Gipsfasersuspension vor der Umwandlung optional durch einen Nasszerkleinerer zu führen, insbesondere einen die Korngröße auf Werte kleiner als 1 mm verkleinernden Nasszerkleinerer. Durch eine Reduzierung der Korngrößen auf kleiner als 1 mm wird die Gipsfasersuspension, die auch als Gipsfaserbrei bezeichnet werden kann, noch homogener. Zudem kann auf diese Weise die Sedimentationsneigung bei der Umwandlung zu Calciumsulfat-alpha-Halbhydrat reduziert werden. Aufgrund dieser Effekte kann der Druckbehälter, insbesondere der Druck-Rührbehälter, einfacher ausgeführt werden, insbesondere mit Rührorganen geringerer installierter Leistung betrieben werden.

Als Nasszerkleinerer können, wie sich gezeigt hat, mit besonderem Vorteil ebenso grundsätzlich bekannte Aggregate aus der Papierindustrie verwendet werden, beispielsweise Entstipper, Refiner und/oder Disperger. In einer anderen Ausgestaltung ergeben sich eine sehr schnelle Zerkleinerung und ein robuster Prozess auch mit Nasszerkleinerern, die üblicherweise verwendet werden, um Kristallagglomerate und sonstige mineralische Feststoffe zu zerkleinern. Derartige Nasszerkleinerer umfassen beispielsweise Mazeratoren. Solche Geräte können auch bei einem Feststoffgehalt von 50 Gew.-% in der Gipsfasersuspension genutzt werden. Ein Durchlauf ist hier ausreichend für eine hinreichende Zerkleinerung, beispielsweise auf Korngrößen kleiner 1 mm.

Der Nasszerkleinerer kann zwischen den Auslass des Nasslöseaggregats (Pulpers) bzw. den Auslass des letzten Störstoffabscheiders und den nachfolgenden Druckbehälter zur thermischen Behandlung geschaltet werden.

In einer besonders vorteilhaften Weiterbildung der vorliegenden Erfindung kann der Gipsfasersuspension wenigstens ein Zusatzgips vor der Umwandlung zu Calciumsulfat-alpha-Halbhydrat zugesetzt werden. Durch Zugabe von Zusatzgipsen mit größeren Calciumsulfat-Dihydrat-Kristallen, beispielsweise synthetischen Gipsen wie REA-Gips, Chemiegips und/oder Naturgips, können die Korngröße der bei der Umwandlung entstehenden Calciumsulfat-alpha-Halbhydrat-Kristalle, die spezifische Oberfläche und das Entwässerungsverhalten gezielt beeinflusst werden. Mithin kann insbesondere vorgesehen sein, dass als Zusatzgips der Gipsfasersuspension 10 bis 80 Gew.-%, insbesondere 10 bis 50 Gew.-%, REA-Gips und/oder Naturgips und/oder Chemiegips bezogen auf den Gesamtgipsanteil zugegeben werden. Abhängig von den gewünschten Eigenschaften des zu erzeugenden Calciumsulfat-alpha-Halbhydrats, welches aus dem Recyclinggips hergestellt werden soll, kann die Gipsfasersuspension mit Zusatzgipsen verschnitten werden, beispielsweise derart, dass sich für den Gesamtgipsanteil 10 bis 80 Gew.-% Zusatzgips und 90 bis 20 Gew.-% Recyclinggips ergeben. Wie bereits erwähnt, kann hierdurch gezielt die spezifische Oberfläche, die Kristallgröße, die Korngrößenverteilung und der Wasseranspruch beeinflusst werden, weiterhin aber auch das Entwässerungsverhalten in einer Gipsfasermischung, was insbesondere hinsichtlich der Herstellung von Gipsfaserplatten aus der Gipsfasersuspension zweckmäßig ist. Beispielsweise hat sich bei Versuchen herausgestellt, dass bei einer Zugabe von bis zu 50 Gew.-% Chemiegips, Naturgips und/oder REA-Gips das Entwässerungs- und/oder Filtrationsverhalten deutlich verbessern lässt, wenn dies gewünscht ist. Insbesondere kann gezeigt werden, dass sich Filtrations- und Entwässerungseigenschaften durch Nutzung solcher Zusatzgipse auf Werte einstellen lassen, die denen heutiger Suspensionen, die in Gipsfasermischungen verwendet werden, im Wesentlichen entsprechen, so dass Einbußen bei der Entwässerungszeit vermieden werden können oder zumindest äußerst gering gehalten werden können. Dass hierfür nur ein Zusatz von maximal 50 Gew.-% des Zusatzgipses erforderlich ist, zeigt, dass äußerst große Mengen des durch das Recycling des Gipskartonmaterials gewonnenen Gipsfaserbreis, also der Gipsfasersuspension mit dem Recyclinggips, herangezogen werden können. Dabei sei an dieser Stelle noch angemerkt, dass ein als Zusatzgips verwendeter Chemiegips aus der Gruppe umfassend Phosphorsäuregips, Zitronensäuregips und Titandioxidgips gewählt sein kann. Zitronensäuregips ist hier besonders bevorzugt.

In weiterer Ausgestaltung kann auch vorgesehen sein, dass als Zusatzgips der Gipsfasersuspension wenigstens ein Gipsabfall aus der Verarbeitung von Gipsprodukten, insbesondere ein Gipsstaub aus der Bearbeitung von Gipsfaserplatten und/oder zerkleinerte Gipsfaserplatten und/oder Gipsschlamm, zugesetzt wird. Dabei kann es in diesem Zusammenhang zweckmäßig sein, dass der Gipsfasersuspension mit dem Gipsabfall wenigstens eine Dicarbonsäure, bevorzugt Bernsteinsäure, oder ein Salz der Dicarbonsäure zugesetzt wird. Mit anderen Worten können andere gipshaltige Abfallstoffe in die wässrige Gipsfasersuspension eingemischt werden, wie dies beispielsweise in EP 2 418 184 A2 vorgeschlagen wurde. Dabei wird feinkörniger, gipshaltiger Abfall herangezogen, beispielsweise gipshaltige Stäube, insbesondere beim Bearbeiten von Gipsfaserplatten entstehende Schleif-, Fräs- und Sägestäube, oder suspendierbarer bzw. zerkleinerter Gipsschlamm, der z.B. bei der Sedimentation von gipshaltigen Wässern abfällt, Gipsfaserabfall oder zerkleinerte Gipskartonabfälle oder eine Mischung der genannten verwendet werden. Die in EP 2 418 184 A2 getätigten Ausführungen lassen sich auch auf das hier beschriebene Vorgehen übertragen, insbesondere was zuzudosierende Mengen an Dicarbonsäure angeht.

Neben Zusatzgipsen oder alternativ dazu kann selbstverständlich auch vorgesehen sein, dass der Gipsfasersuspension wenigstens ein Additiv vor oder bei der Umwandlung zu Calciumsulfat-alpha-Halbhydrat zugesetzt wird. Hierbei eignen sich übliche Additive zur Beeinflussung des Kristallhabitus von Calciumsulfat-alpha-Halbhydrat, neben der bereits erwähnten Bernsteinsäure beispielsweise Maleinsäure und deren Salze. Weitere Zusätze, welche die Umwandlung beschleunigen und das Kristallwachstum beeinflussen, sind beispielsweise Aluminiumsulfat, Kaliumsulfat oder Kaliumaluminiumsulfat.

Mit besonderem Vorteil kann der Zusatz in dem als Druck-Rührbehälter ausgebildeten Druckbehälter erfolgen. Das bedeutet, die Prozesse des Mischens der Gipsfasersuspension mit Zusatzgips und/oder der Zusatz von Additiven können direkt in einem Druck-Rührbehälter erfolgen, in welchem auch die Umwandlung zu Calciumsulfat-alpha-Halbhydrat erfolgt. Alternativ ist es auch denkbar, dies wenigstens teilweise in einem separaten Rührbehälter durchzuführen.

Wie bereits erwähnt, kann schließlich die zu Calciumsulfat-alpha-Halbhydrat umgewandelte Gipsfasersuspension verwertet werden. Beispielsweise kann nach dem Ende der Umwandlung das Produkt auf weniger als 100°C abgekühlt, entwässert, getrocknet und gelagert werden. Alternativ kann die auf weniger als 100°C gekühlte Gipsfasersuspension direkt einem Prozess zur Herstellung von Gipskartonplatten oder Gipsfaserplatten zugeführt werden. Hierbei kann die Gipsfasersuspension mit weiteren Rohstoffen wie abbindefähigen Gipsen, Pulpen und bekannten Additiven gemischt werden und wird dann dem Verarbeitungsprozess zur Herstellung von Gipskartonplatten oder Gipsfaserplatten zugeführt.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze zur Erläuterung des erfindungsgemäßen Verfahrens,
- Fig. 2: eine mehrstufige Ausführung für die Störstoffabscheidung,
- Fig. 3: eine Ansicht innerhalb eines Pulpers vor Beginn eines Auflösevorgangs,
- Fig. 4: eine Ansicht innerhalb eines Pulpers nach 10 Minuten Lösezeit,
- Fig. 5: eine Ansicht innerhalb eines Pulpers nach 15 Minuten Lösezeit, und
- Fig. 6: einen Graphen zur Ermittlung eines Kennwerts für das Filtrationsverhalten.

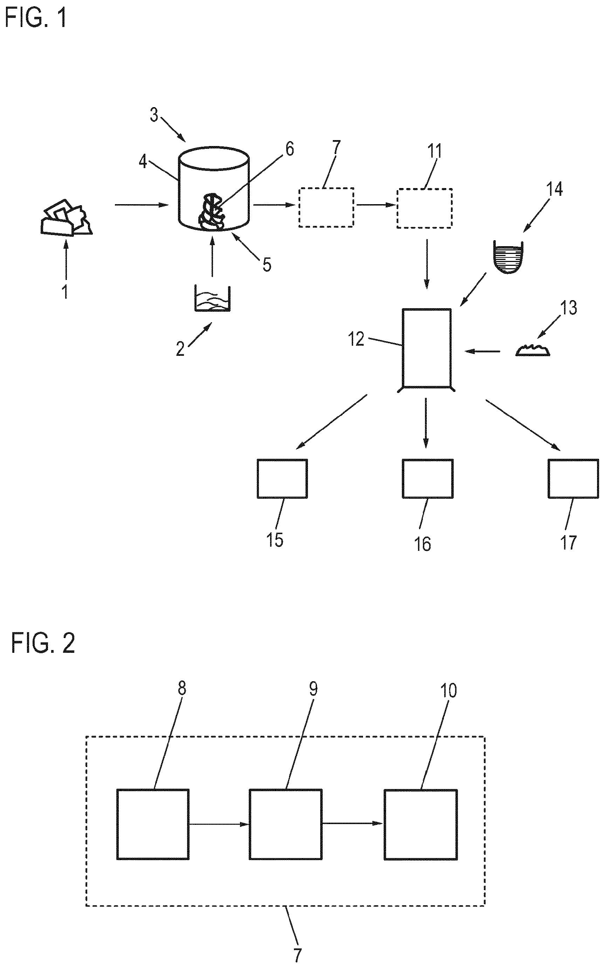

Fig. 1 zeigt eine den Ablauf des erfindungsgemäßen Verfahrens erläuternde Prinzipskizze. Dabei wird ausgegangen von Gipskartonmaterial 1, das recycelt werden soll, vorliegend Gipskartonplattenabfällen. Die Gipskartonplattenabfälle können beispielsweise aus der Herstellung und Verarbeitung beim Hersteller stammen, aus der Verarbeitung auf einer Baustelle und/oder als Abfälle aus der Renovierung und/oder dem Abbruch von Gebäuden. Gipskartonplattenabfälle aus der Herstellung und Verarbeitung von Gipskartonplatten können beispielsweise Ausschussprodukte aus Gipskartonwerken, Schnitt- und Stanzreste, die bei der Konfektionierung von Gipskartonplatten anfallen und dergleichen umfassen. Von einer Baustelle können beispielsweise Gipskartonplattenabfälle, die durch Plattenbruch entstanden sind, und Zuschnittreste stammen.

Gipskartonplattenabfälle aus der Renovierung und dem Abbruch können am ehesten Störstoffe enthalten, beispielsweise Fliesenreste, Schrauben, Nägel und dergleichen. Hierauf wird im Folgenden noch näher eingegangen werden.

Das Gipskartonmaterial 1 wird gravimetrisch gemeinsam mit Wasser 2 in einen Pulper 3 als Nasslöseaggregat eingebracht, beispielsweise mittels eines Plattenwiegebands derart, dass 50 Gew.-% Gipskartonmaterial 1 und 50 Gew.-% Wasser 2 vorliegen. Allgemein sollte der Anteil des Gipskartonmaterials zwischen 30 und 60 Gew.-% liegen. Der Pulper 3 umfasst ein in einem Rührbehälter 4 (Rührbottich) angeordnetes Rührwerk 5 als Rühreinrichtung, welches einen vorliegend spiralartigen Rotor 6 umfasst, der in Ausführungsbeispielen mit beispielsweise sägezahnartigen Verkleinerungszähnen versehen sein kann. Bevorzugt ist der Pulper 3 jedoch ein Hochkonsistenz-Pulper, bei dem derartige Zerkleinerungszähne nicht notwendig sind.

Innerhalb des Pulpers wird das Gipskartonmaterial derart aufgelöst, dass möglichst weitgehend getrennte Fasern und Gipskörner vorliegen. Die Lösezeit kann beispielsweise 10 bis 20 Minuten, bevorzugt 14 bis 16 Minuten, betragen und ist, gemeinsam mit der Ausbildung des Pulpers 3, so gewählt, dass möglichst nur noch Korngrößen kleiner als 10 mm in der entstehenden Gipsfasersuspension vorliegen. Das Nutzvolumen des Pulpers 3 ist abhängig vom gewünschten Durchsatz je Zeiteinheit. Ist das dadurch erforderliche Nutzvolumen sehr klein, so ist es vorteilhaft, den Gipskarton in einfacher Form mechanisch so vorzuzerkleinern, dass die großformatigen Gipskartonplatten nicht zu sperrig im Behälter sind und schneller mit dem Wasser benetzt werden können. Neue Gipskartonplatten haben üblicherweise eine Breite von 600 bis 1250 mm und eine Länge von 1250 bis 3000 mm. Sollten solche Platten als Ausschussplatten verwendet werden, empfiehlt sich eine mechanische Vorzerkleinerung vor der Dosierung in den Pulper, damit der Lösevorgang schneller erfolgt. Selbst bei kleinen Pulpern von nur 5 m³ Nutzvolumen reicht eine Zerkleinerung auf ca. 600 mm x 600 mm, wobei eine Zerkleinerung auf kleinere Stücke von z. B. DIN A4-Größe nicht nachteilig ist. Eine derartige Zerkleinerung ist sehr staubarm mit herkömmlichen, langsam drehenden Ein- oder Zweiwellenzerkleinern machbar. Die dem Zerkleinerer zugeführten Platten können dann direkt z. B. über ein Förderband auf das Plattenwiegeband gefördert werden. Alternativ kann der großformatige Gipskarton auf sehr einfache Art im Lager durch Überfahren mit einem Radlader mit Kettenantrieb, welcher für den Transport der Platten genutzt wird, ausreichend vorzerkleinert werden.

Aufgrund des Feststoffgehalts von beispielsweise 50 Gew.-% liegt im gelösten Zustand eine gut pumpfähige Gipsfasersuspension vor. Es sei angemerkt, dass es durchaus denkbar ist, dem Pulper 3 nachgeschaltet Wasser hinzuzufügen, um einen geringeren Feststoffanteil für die weitere Verarbeitung herzustellen.

Wird störstoffhaltiges Gipskartonmaterial 1 verwendet, wie eingangs dargelegt, beispielsweise aus einer Renovierung und/oder dem Abbruch von Gebäuden, kann die Gipsfasersuspension aus dem Pulper 3, der ein auch in der Papierindustrie verwendbarer Pulper ist, durch wenigstens einen Störstoffabscheider in einem Störstoffabscheidungsprozess 7 geführt werden. Auch hier können Aggregate, die aus der Papierindustrie bekannt sind, vorteilhaft eingesetzt werden.

Fig. 2 zeigt beispielshaft eine dreistufige Ausgestaltung des Störstoffabscheidungsprozesses 7. In einer ersten Stufe wird ein hier nur angedeuteter Scheibensortierer 8 mit einer Siebgröße von 10 mm verwendet, wobei alternativ zu einem Sieb bei dessen Löcher zusetzenden Störstoffen auch eine Waschtrommel verwendet werden kann. Diesem folgt zur Abscheidung von Schwerteilen ein Schwerstoffabscheider (Hydrozyklon) 9 in einer zweiten Stufe, woraufhin in einer dritten Stufe mittels eines Zylindersortierers (Drucksortierers) 10 Störstoffanteile bis zu einer Größe hinunter auf 2 mm aussortiert werden können.

Zur Verbesserung des Sedimentierungsverhaltens und/oder zur Erfüllung anderer Anforderungen bezüglich des entstehenden Produktes kann als weiterer optionaler Prozess die Gipsfasersuspension auch durch einen Nasszerkleinerer 11 geführt werden, um die Korngrößen insgesamt auf kleiner als 1 mm zu zerkleinern, so dass die Gipsfasersuspension noch homogener wird und weniger zum Sedimentieren bei der folgenden Umwandlung des enthaltenen Calciumsulfat-Dihydrats in Calciumsulfat-alpha-Halbhydrat neigt. Es sei angemerkt, dass die Gipsfasersuspension aber auch ohne Verwendung des Nasszerkleinerers 11 so aufbereitet ist, dass sie im Nassverfahren zu feinteiligem Calciumsulfat-alpha-Halbhydrat umgewandelt werden kann, da sich gezeigt hat, dass größere Gipskörner während des nun folgenden Umwandlungsprozesses zerkleinert werden. Soll ein Nasszerkleinerer 11 verwendet werden, können herkömmliche Aggregate aus der Papierindustrie, beispielsweise Entstipper, Refiner und/oder Disperger verwendet werden. Denkbar sind auch zur Verkleinerung von Kristallagglomeraten und/oder sonstigen mineralischen Feststoffen bekannte Mazeratoren oder verwandte Aggregate.

Unabhängig davon, ob einer der optionalen Prozesse durchlaufen wurde oder nicht, wird die Gipsfasersuspension dann einem als Druck-Rührbehälter ausgebildeten Druckbehälter 12 zugeführt, wo die Gipsfasersuspension optional noch mit einem Zusatzgips 13 verschnitten werden kann und/oder Additive 14 hinzugefügt werden können, bevor oder während die Umwandlung des in der Gipsfasersuspension enthaltenen Calciumsulfat-Dihydrats zu Calciumsulfat-alpha-Halbhydrat bei Temperaturen zwischen 110 und 150°C, bevorzugt 120 bis 125°C, erfolgt. Der Zusatzgips 13 kann beispielsweise REA-Gips, Naturgips und/oder Chemiegips umfassen und mit einem Anteil von bis zu 80 Gew.-% (bezogen allein auf den Gips) zugefügt werden, um gewünschte Eigenschaften des zu erzeugenden Calciumsulfat-alpha-Halbhydrats herzustellen, beispielsweise die spezifische Oberfläche, die Kristallgröße, die Korngrößenverteilung, den Wasseranspruch und das Entwässerungsverhalten gezielt zu beeinflussen.

Denkbar ist es jedoch auch, gegebenenfalls zusätzlich, dass es sich bei dem Zusatzgips um feinkörnige Gipsabfälle, beispielsweise Gipsstäube, handelt, wobei dann ein zweckmäßiges Additiv 14 eine Dicarbonsäure, insbesondere Bernsteinsäure, ist. Neben der bereits erwähnten Bernsteinsäure und deren Salzen können selbstverständlich auch andere, grundsätzlich bekannte Additive 14 zur Beeinflussung des Kristallhabitus bzw. des Kristallwachstums und/oder zur Beschleunigung der Umwandlung verwendet werden, beispielsweise Maleinsäure und deren Salze, Aluminiumsulfat, Kaliumsulfat oder Kaliumaluminiumsulfat. Während im vorliegenden Ausführungsbeispiel der Zusatzgips 13 und/oder die Additive 14 direkt in dem Druck-Rührbehälter 12 zugemischt werden, ist es selbstverständlich in anderen Ausführungsbeispielen auch denkbar, einen separaten Rührbehälter zu verwenden.

Wie bereits erwähnt, erfolgt die Umwandlung zu Calciumsulfat-alpha-Halbhydrat bevorzugt dadurch, dass die Gipsfasersuspension auf eine Temperatur zwischen 110 und 150°C erhitzt wird, bevorzugt auf 120 bis 125°C, und bei dieser Erhitzungstemperatur für eine Haltezeit gehalten wird. Bei ausreichendem Energieeintrag entsprechend der für die Umwandlung benötigten Energie können die Haltezeiten beispielsweise zwischen 5 und 20 Minuten, beispielsweise bei 10 Minuten für 125°C, liegen. Dann ist das Calciumsulfat-Dihydrat der Gipsfasersuspension vollständig zu Calciumsulfat-alpha-Halbhydrat der eingestellten Eigenschaften umgewandelt, was im Übrigen auch für an Kartonfasern noch anhaftende Gipskörner gilt.

Die entstehende Gipsfasersuspension mit alpha-Calciumsulfat-Halbhydrat kann in einer ersten Verwertungsalternative 15 auf eine Temperatur, die kleiner als 100°C ist, abgekühlt werden, entwässert, getrocknet und gelagert werden. In einer zweiten Verwertungsalternative 16 wird die ebenso auf eine Temperatur kleiner als 100°C abgekühlte Gipsfasersuspension direkt einem Prozess zur Herstellung von Gipskartonplatten zugeführt. Schließlich ist es in einer dritten, bevorzugten Verwertungsalternative 17 denkbar, die Gipsfasersuspension einem Prozess zur Herstellung von Gipsfaserplatten zuzuführen. Allgemein kann die Suspension mit weiteren Rohstoffen wie abbindefähigen Gipsen, Pulpe und bekannten Additiven gemischt werden, bevor die Zuführung zu den Bearbeitungsprozessen zur Herstellung von Gipskartonplatten oder Gipsfaserplatten (Verwertungsalternativen 16 und 17) zugeführt wird.

Im Folgenden sollen nun mehrere Beispiele, die die Funktionsfähigkeit der vorliegenden Erfindung belegen und zur Herleitung von Eigenschaften des bestehenden Produkts verwendet werden können, erläutert werden.

### Beispiel 1: Herstellung einer Gipsfasersuspension in einem Laborpulper

Für die im folgenden beschriebenen Versuche wurde ein Laborpulper (Bi-Pulper DA 100E der Firma A. Celli) verwendet, in welchem Altpapier bis zu einer Stoffdichte von bis zu maximal ca. 13 % gelöst werden kann. Der Pulperdurchmesser betrug 550 mm, die Höhe 600 mm. Der Pulper besteht aus einem am Boden liegenden Rotor mit einem 5,5 kW-Antriebsmotor und einem oberen Rotor mit einem 2,8 kW-Antriebsmotor, welcher für das Umwälzen und Durchkneten des Papierstoffes verwendet wird. Der untere Rotor hat einen Durchmesser von 300 mm und kann mit 350 und 700 U/min betrieben werden. Der obere Rotor wird über ein Kardangelenk angetrieben und erlaubt dadurch eine Pendelbewegung. Mit dem oberen Rotor ist eine maximale Stoffdichte von 13 % möglich, ohne den oberen Rotor eine maximale Stoffdichte von maximal 7 %. Für die folgenden Versuche zur Lösung von Gipskartonplatten wurde der obere Rotor beim Pulper demontiert. In dieser Ausführung ist der Laborpulper für eine Stoffdichte von maximal 7 % bei Lösen von Altpapier konfiguriert und mithin als Mittelkonsistenz-Pulper zu verstehen.

Für die Versuche wurden 20 kg Wasser vorgelegt, wonach 20 kg per Hand vorzerkleinerte Gipskartonplatten als Gipskartonmaterial zugefügt wurden. Beim ersten Versuch im Laborpulper wurde der Pulperrotor 15 Minuten bei 350 U/min betrieben, danach weitere 5 Minuten bei 700 U/min. Nach den 20 Minuten Rührzeit wurde eine Probe genommen. Die Probe wurde auf eine Labornutsche mit Filterpapier gegeben. Unter Vakuum wurde das Wasser vom Feststoff separiert. Der auf dem Filterpapier zurückgebliebene Feststoff wurde getrocknet. Es wurde festgestellt, dass nach Ablauf der Versuchszeit die groben Bestandteile deutlich reduziert sind, die maximale Korngröße des Gipses betrug 5 mm.

In einem weiteren, zweiten Versuch wurde der Pulperrotor 5 Minuten bei 350 U/min betrieben, danach weitere 5 Minuten bei 700 U/min. Dann wurde eine Probe genommen. Bereits nach 10 Minuten ergab sich eine visuell homogene Gipsfasersuspension. Das Ergebnis zeigte, dass bereits nach 10 Minuten Lösezeit ein vollständig gelöster Karton vorliegt und der Gips so zerkleinert wurde, dass er bis zu Korngrößen von maximal ca. 10 mm vorliegt. Der große Teil des Gipses weist eine Korngröße <1 mm auf.

### Beispiel 2: Herstellung einer Gipsfasersuspension in einem Technikumspulper mit einem Volumen von 2,5 Kubikmetern

In diesem Beispiel wurde ein Technikumspulper verwendet, der ein Fassungsvermögen von 2500 Litern/2,5 Kubikmetern aufweist. Der Technikumspulper weist einen Rotor in typischer Wendelgeometrie auf, wie sie in Hochkonsistenz-Pulpern üblicherweise für Feststoffgehalte von 12 bis 15 % beim Lösen von Altpapier eingesetzt wird, so dass er als ein Hochkonsistenz-Pulper zu betrachten ist. Der Motor für den Antrieb des Rotors hat eine installierte Leistung von 37 kW und ist über eine Gleitringdichtung mit Sperrwasserzulauf abgedichtet. Für die Versuche wurden die als Gipsmaterial verwendeten Gipskartonplatten per Hand auf ca. 30 x 50 cm vorzerkleinert, so dass die Platten sich im Technikumspulper nicht verkanteten und ein geringes Volumen einnahmen. In einem Vorversuch wurden 100 kg Gipskartonmaterial und 100 kg Wasser dosiert. Durch den Sperrwasserzulauf liefen 6,5 l/min bei Betrieb des Rotors in den Pulper, wodurch sich der Wasseranteil mit zunehmender Rührzeit erhöht und der Feststoffgehalt reduziert. Dabei ist anzumerken, dass bei einer tatsächlichen industriellen Realisierung, falls überhaupt existent, ein deutlich geringerer Sperrwasserzulauf vorhanden ist, so dass ein ursprünglich eingestellter Feststoffanteil von 50 Gew.-% deutlich genauer erhalten bleibt.

Nach 10 Minuten Lösezeit waren vereinzelt Stücke des Gipskartons zu sehen, nach 15 Minuten waren die Gipskartonplatten zum größten Teil gelöst. Unter Berücksichtigung des Sperrwassers ergibt sich nach 10 Minuten rechnerisch ein Feststoffgehalt von 37,7 Gew.-%, nach 15 Minuten von 33,6 Gew.-%.

In einem zweiten Versuch wurden dann 200 kg Gipskartonplatten mit 200 kg Wasser versetzt, wobei ein ähnliches Ergebnis einstellte. Nach 15 Minuten war die Suspension in einem visuell ähnlichen Zustand wie die Suspension im Laborpulper nach 10 Minuten, nach einer Lösezeit von 20 Minuten wurde der Technikumspulper geleert. Hier ergibt sich unter Berücksichtigung des Sperrwassers nach 10 Minuten rechnerisch ein Feststoffgehalt von 43 Gew.-%, nach 15 Minuten von 40,2 Gew.-% und beim Ableeren von 37,7 Gew.-%. Die nach dem Ableeren erzeugte Gipsfasersuspension ist mit der Gipsfasersuspension aus dem Laborpulper (Beispiel 1) annähernd vergleichbar.

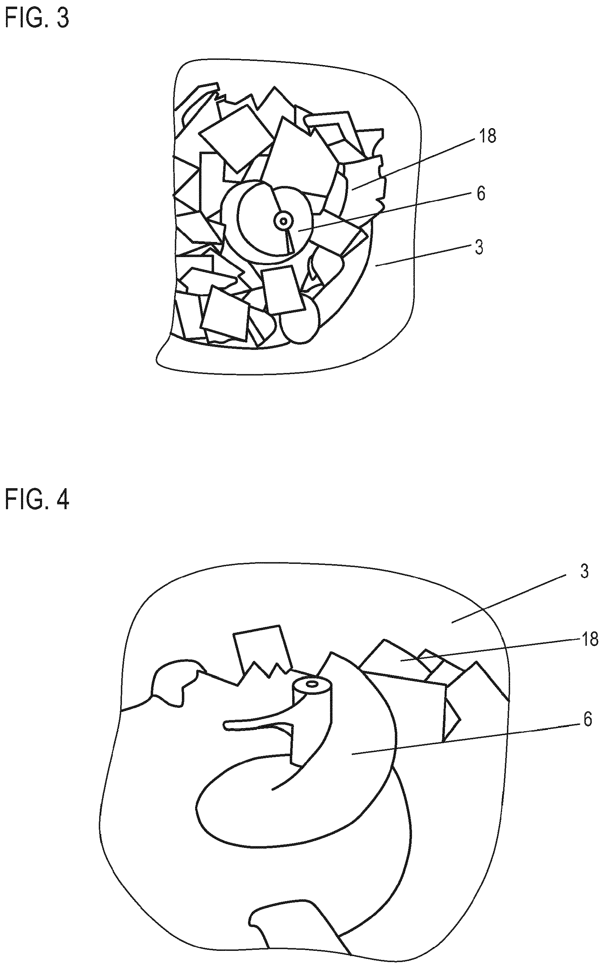

Die Fig. 3 bis 5 zeigen das Löseverhalten der Gipskartonplatten in dem Hochkonsistenz-Technikumspulper zu unterschiedlichen Zeitpunkten.

Fig. 3 zeigt die als Gipskartonmaterial 1 verwendeten Gipskartonplatten 18 innerhalb des Pulpers 3 vor Beginn des Lösevorgangs. Fig. 4 zeigt den Zustand nach 10 Minuten Lösezeit, wonach zwar ein Großteil der Gipskartonplatten 18 bereits gelöst sind, jedoch im Randbereich noch ungelöste Gipskartonplatten 18 vorliegen.

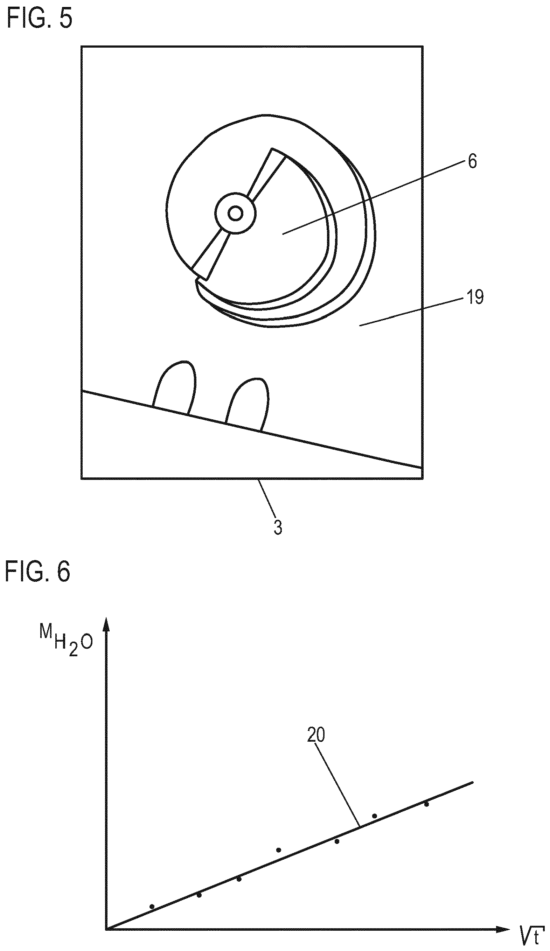

Fig. 5 zeigt schließlich den Zustand nach 15 Minuten Lösezeit, wo um den Rotor 6 herum lediglich visuell gleichförmige Gipsfasersuspension 19 verbleibt.

Die abgeleerte, homogene Gipsfasersuspension 19 wurde für weitere Versuche zur Umwandlung der Gipsbestandteile in Calciumsulfat-alpha-Halbhydrat in einem Druck-Rührbehälter mit einem maximalen Gesamtinhalt von 164 Liter mit Ankerrührwerk verwendet.

Der Behälter kann mit Dampf beispielsweise auf zwei Arten beheizt werden: Über eine Mantelbeheizung und optional auch über eine Direktdampfbeheizung in einer Rohrleitung, in welcher die Gipsfasersuspension umgewälzt wird. Die Versuche wurden ausschließlich mit der Mantelheizung betrieben.

Die vergleichenden Versuche im Druck-Rührbehälter wurden so durchgeführt, dass sich immer ein Wasser zu Feststoff-Verhältnis von 4:1 einstellt. Der Behälter wurde zuerst mit Wasser aus der Gipsfaserproduktion befüllt. Sodann wurde das Natriumsalz der Bernsteinsäure dosiert. Danach wurde bei laufendem Rührwerk der Feststoff so dosiert, dass nach Abzug der Feuchte des umzuwandelnden Gipsproduktes 10 kg Feststoffe vorlagen. Bei dem Wasser wurde die Feuchte, die der umzuwandelnde Gips mitbringt, berücksichtigt.

Zur Bestimmung charakteristischer Eigenschaften des erzeugten Calciumsulfat-alpha-Halbhydrats wurde die heiße Gipsfasersuspension nach der Entnahme aus dem Druckbehälter filtriert und anschließend mehrfach mit Spiritus gespült/filtriert. Abschließend wurde mit Acton gespült. Die Trocknung des Filterkuchens erfolgte bei 40°C. Durch diese Behandlung wird eine Rehydration des Calciumsulfat-alpha-Halbhydrats zu Calciumsulfat-Dihydrat vermieden. Der so erzeugte Filterkuchen wurde für weitere Untersuchungen verwendet.

Dabei wurden zur Umwandlung im Druck-Rührbehälter drei verschiedene Zusammensetzungen getestet:
Versuch 1: Die im Technikumspulper erzeugte Gipsfasersuspension wurde mit Zusatz von 0,1 % des Natriumsalzes der Bernsteinsäure bezogen auf die gipsbasierten Feststoffe umgewandelt.

Versuch 2: Die im Pulper erzeugte Gipsfasersuspension wurde mit einem Zitronensäuregips verschnitten, so dass auf die Trockenstoffe 50 Gew.-% Zitronensäuregips und 50 Gew.-% Gips aus den Gipskartonplatten vorlagen.

Versuch 3: Die im Technikumspulper erzeugte Gipsfasersuspension wurde mit einem REA-Gips verschnitten, so dass auf die Trockenstoffe 50 Gew.-% REA-Gips und 50 Gew.-% Gips aus den Gipskartonplatten vorlagen. Die Suspension wurde mit Zusatz von 0,1 % des Natriumsalzes der Bernsteinsäure bezogen auf die gipsbasierten Feststoffe umgewandelt.

Die Umwandlung erfolgte bei 120 bis 125°C über eine Mantelbeheizung. Die Proben wurden nach 40 bzw. 50 Minuten Haltezeit gezogen.

Zur Beurteilung der Proben aus den Versuchen 1 bis 3 wurden folgende Untersuchungen durchgeführt:
- visuelle Beurteilung der Gipsfasersuspension nach der Umwandlung.
- Ermittlung der spezifischen Oberfläche nach Blaine.
- Ermittlung der Korngrößenverteilung mit Lasergranulometrie (Gerät: Coulter LS 13320 der Firma Beckmann Coulter GmbH). Als Messflüssigkeit wurde Isopropanol verwendet, die Proben wurden darin 90 s mit dem internen Ultraschall dispergiert.
- Prüfung der Filtrationsgeschwindigkeit einer Gipsfasersuspension, die aus den erzeugten Gipsen und einer Altpapierpulpe definierter und in allen Fällen gleicher Zusammensetzung und Stoffdichte hergestellt wurde.

Für die Prüfung der Filtrationsgeschwindigkeit wurde ein Fasergehalt von 11 Gew.-% bezogen auf Fasern und Gips eingestellt. Die über den Gipskarton eingebrachte Faser wurde beim Fasergehalt eingerechnet. Dabei wurde das Gipsfaser-Gemisch in einen Filtrationsbehälter bestehend aus einem Stahlsieb mit 3mm-Lochung, auf welchem ein Schwarzbandfilter liegt, gefüllt und mit Unterstützung von Vakuum (0,4 bar Unterdruck) nach unten entwässert, wobei der Durchmesser der Filtrationsfläche 102cm betrug. Das Filtrat wurde in einer Saugflasche aufgefangen. Die Saugflasche war auf einer Waage positioniert. Mit Hilfe einer Messdatenerfassung wurde der zeitliche Verlauf der Filtratmenge aufgezeichnet. Dazu wurde eine Menge von 114 g des zu untersuchenden Gipses mit 17 g Faser (auf trockene Faser gerechnet) in Form des Altpapieres der Gruppe 5.03.01 nach der europäischen Liste der Altpapier-Standardsorten DIN EN 643 - 2014 - 5 und 500 g destilliertem Wasser mit einem Gramm Gips-Abbindeverzögerer Typ Retardan L200 von Sika gemischt. Bei der Fasermenge wurden Fasern berücksichtigt, die über den Recylinggips mit eingebracht werden. Dementsprechend wird dann der Faserstoff reduziert (17 g Faser = Summe aus Altpapier der Gruppe 5.03.01 nach der europäischen Liste der Altpapier-Standardsorten DIN EN 643 - 2014 - 5 und Fasern aus Recycling-Gips).

Aus der Auftragung der Wassermenge gegen die Wurzel der Zeit ergibt sich eine Gerade. Dies ist schematisch in Fig. 6 dargestellt. Die Steigung der dort gezeigten Geraden 20 ist ein Maß für die Filtrationsgeschwindigkeit und wird im Folgenden als K-Wert bezeichnet. Je höher der K-Wert, umso schneller filtriert die Gipsfasermischung.

Zusätzlich zu den Ergebnissen der Versuche 1 bis 3 wurden der Prüfung der Filtrationsgeschwindigkeit auch einige Referenzgipse unterzogen, vorliegend kommerziell erhältliches Calciumsulfat-alpha-Halbhydrat (der Bezeichnung AGLF der Firma Knauf Gips KG), Standardgipsmischungen zur Herstellung von Gipsfaserplatten am Produktionsstandort der Lindner Norit GmbH in Dettelbach (für Plattendicken zwischen 20 bis 40 mm), Calciumsulfat-alpha-Halbhydrat aus 100 % Gipsfaserstaub (vgl. hierzu auch EP 2 418 184 A2) und Stuckgips aus 100 % Gipsfaserstaub.

Als Ergebnis der Untersuchungen wiesen die Mischungen aller drei Versuche nach Abschluss der Umwandlung zu Calciumsulfat-alpha-Halbhydrat eine optisch homogene Suspension auf. Die ursprünglich noch vorhandenen gröberen Gipskörner aus der Gipsfasersuspension, die aus dem Pulper entnommen wurde, lagen in der zu Calciumsulfat-alpha-Halbhydrat umgewandelten Suspension nicht mehr vor und sind damit durch die Umwandlung vollständig zerkleinert worden. Die restlichen Ergebnisse zeigt die folgende Tabelle:

| Gips | K-Wert [g/s^{0,5}] | Blaine-Wert [cm²/g] | Median der Korngröße [µm] |
|---|---|---|---|
| Versuch 1: | 40,8 | 5402 | 24,6 |
| Alpha-Halbhydrat aus 100% Recyclinggips aus Gipskartonplattenabfall | | | |
| Versuch 2: | 59,1 | 3262 | 44,2 |
| Alpha-Halbhydrat aus 50 Gew.-% Recyclinggips aus Gipskartonplattenabfall und 50 % Gew. Zitronensäuregips | | | |
| Versuch 3: | 55,4 | 3329 | 27,9 |
| Alpha-Halbhydrat aus 50 Gew.-% Recyclinggips aus Gipskartonplattenabfall und 50 Gew.-% REA-Gips | | | |
| Vergleich: kommerziell erhältliches Calciumsulfat-alpha-Halbhydrat: AGLF | 65,9 | Nicht ermittelt | Nicht ermittelt |
| Standardgipsmischungen zur Herstellung von Gipsfaserplatten am Produktionsstandort der Lindner Norit GmbH in Dettelbach (für Plattendicken zwischen 20 bis 40 mm) | 43 bis 60 | Nicht ermittelt | Nicht ermittelt |
| Alpha-Calciumsulfat-Halbhydrat aus 100 % Gipsfaserstaub | 29,1 | Nicht ermittelt | Nicht ermittelt |
| Stuckgips aus 100 % Gipsfaserstaub | 6,6 | Nicht ermittelt | Nicht ermittelt |

Besonders interessant sind hierbei die auch für Vergleichsgipse ermittelten K-Werte. Bereits das Material aus Versuch 1 (100 % Gipsfasersuspension aus dem Gipskartonmaterial) liegt dicht an dem unteren Wert der Standardgipsmischung zur Herstellung von Gipsfaserplatten. Gegenüber dem Calciumsulfat-alpha-Halbhydrat aus 100 % Gipsfaserstaub liegt eine verbesserte Filtration vor. Aus dem gleichen Ausgangsmaterial, nämlich 100 % Gipsfaserstaub, hergestellter Stuckgips ist nicht ausreichend schnell filtrierbar, der K-Wert beträgt hier nur 6,6.

Die Mischung aus Versuch 2, in dem Calciumsulfat-alpha-Halbhydrat aus 50 Gew.-% Recyclinggips aus der Gipsfasersuspension und 50 Gew.-% Zitronensäuregips hergestellt wurde, weist mit 59,1 einen K-Wert auf, welcher einer Suspension aus 100 % kommerziell erhältlichen Calciumsulfat-alpha-Halbhydrat der Bezeichnung AGLF sehr nahe kommt und im oberen Bereich der Standardgipsmischungen zur Herstellung von Gipsfaserplatten am Standort der Lindner Norit GmbH in Dettelbach liegt. Bei der Mischung aus dem Versuch 3, wo Calciumsulfat-alpha-Halbhydrat aus 50 Gew.-% Recyclinggips aus der Gipsfasersuspension und 50 Gew.-% REA-Gips hergestellt wurde, weist mit 55,4 einen etwas geringeren K-Wert auf als das Produkt aus Versuch 2. Damit ist aber dennoch ein K-Wert vorhanden, der im mittleren bis oberen Bereich von Standardgipsmischungen zur Herstellung von Gipsfaserplatten am Standort der Lindner Norit GmbH in Dettelbach liegt.

Damit ist belegt, dass sich sehr hohe Anteile an Gipsfasersuspensionen aus Gipskartonmaterial in Mischungen verarbeiten lassen. Ohne Einbuße der Entwässerungszeit lassen sich sicher mindestens 50 Gew.-% Gipsfasersuspension aus Gipskartonmaterial, insbesondere Gipskartonplattenabfall, in einer solchen Gipsmischung verwerten, wenn die Gipsfasersuspension gemäß der vorliegenden Erfindung hergestellt wird. Für dünnere Gipsfaserplatten, beispielsweise bis zu 20 mm Dicke, die geringere Filtrationswege benötigen, ist auch die Verwendung der Gipsfasersuspension aus Versuch 1 vorstellbar, also die Verwendung von Calciumsulfat-alpha-Halbhydrat aus 100 % Gipsfasersuspension aus Gipskartonmaterial, insbesondere Gipskartonplattenabfall.

## Patentansprüche

1. Verfahren zum Recycling von Calciumsulfat-Dihydrat enthaltendem Gipskartonmaterial (1), umfassend folgende Schritte:
- Einbringen des Gipskartonmaterials (1) gemeinsam mit Wasser (2) in ein Nasslöseaggregat, nämlich einen Pulper (3), und Auflösen des Gipskartonmaterials (1) in dem Nasslöseaggregat zum Erzeugen einer Gipsfasersuspension (19), und
- Umwandlung des Calciumsulfat-Dihydrats der Gipsfasersuspension (19) zu Calciumsulfat-alpha-Halbhydrat in einem Druckbehälter (12), wobei die Gipsfasersuspension (19) in dem Druckbehälter (12) erhitzt wird und die erhitzte Gipsfasersuspension (19) auf der Erhitzungstemperatur gehalten wird.

2. Verfahren nach Anspruch 1, **dadurch gekennzeichnet, dass** das Gipskartonmaterial (1) derart gravimetrisch in das Nasslöseaggregat eingebracht wird, dass sich eine Mischung aus 30 bis 60 Gew.-% Gipskartonmaterial (1) mit 40 bis 70 Gew.-% Wasser (2) ergibt, und/oder dass das Gipskartonmaterial (1) für eine Lösezeit von 10 bis 20 Minuten, bevorzugt 14 bis 16 Minuten, in dem Nasslöseaggregat gehalten wird.

3. Verfahren nach Anspruch 1 oder 2, **dadurch gekennzeichnet, dass** als Nasslöseaggregat ein Hochkonsistenz-Pulper (3) verwendet wird und/oder eine Zerkleinerungszähne aufweisende Rühreinrichtung in dem Nasslöseaggregat verwendet wird.

4. Verfahren nach einem der vorangehenden Ansprüche, **dadurch gekennzeichnet, dass** bei einem wenigstens einen Störstoff enthaltenden Gipskartonmaterial (1) die Gipsfasersuspension (19) aus dem Nasslöseaggregat durch wenigstens einen Störstoffabscheider geführt wird.

5. Verfahren nach Anspruch 4, **dadurch gekennzeichnet, dass** der wenigstens eine Störstoffabscheider aus der Gruppe umfassend einen Scheibensortierer (8), einen Schwerstoffabscheider (9) und einen Zylindersortierer (10) gewählt ist.

6. Verfahren nach Anspruch 4 oder 5, **dadurch gekennzeichnet, dass** wenigstens einer des wenigstens einen Störstoffabscheiders ein zusätzlich größere Gipskörner zerkleinerndes Sieb mit Rotor umfasst.

7. Verfahren nach einem der Ansprüche 4 bis 6, dass zur Störstoffabscheidung in einer ersten Stufe in einem Grobsortierer, insbesondere dem Scheibensortierer (8), mit einem Sieb und/oder einer Waschtrommel Störstoffpartikel größer als 10 mm entfernt werden, wonach in einer zweiten Stufe Schwerteile des Störstoffs durch den Schwerstoffabscheider (9) entfernt werden und in einer dritten Stufe mittels eines bzw. des Zylindersortierers (10) Störstoffpartikel größer als 2 mm entfernt werden.

8. Verfahren nach einem der Ansprüche 4 bis 7, **dadurch gekennzeichnet, dass** die Gipsfasersuspension (19) vor dem Durchlauf durch den wenigstens einen Störstoffabscheider auf einen Feststoffgehalt von 10 bis 25 Gew.-% verdünnt wird.

9. Verfahren nach einem der vorangehenden Ansprüche, **dadurch gekennzeichnet, dass** die Gipsfasersuspension (19) aus dem Pulper (3) durch wenigstens einen Nasszerkleinerer (11) geführt wird, insbesondere einen die Korngröße auf Werte kleiner als einen Millimeter verkleinernden Nasszerkleinerer (11).

10. Verfahren nach einem der vorangehenden Ansprüche, **dadurch gekennzeichnet, dass** der Gipsfasersuspension (19) wenigstens ein Zusatzgips (13) und/oder wenigstens ein Additiv (14) vor der Umwandlung zu Calciumsulfat-alpha-Halbhydrat zugesetzt wird.

11. Verfahren nach Anspruch 10, **dadurch gekennzeichnet, dass** als Zusatzgips (13) der Gipsfasersuspension (19) 10 bis 80 Gew.-% REA-Gips und/oder Naturgips und/oder Chemiegips, insbesondere Zitronensäuregips, bezogen auf den Gesamtgipsanteil zugegeben werden.

12. Verfahren nach Anspruch 10 oder 11, **dadurch gekennzeichnet, dass** als Zusatzgips (13) der Gipsfasersuspension (19) wenigstens ein Gipsabfall aus der Verarbeitung von Gipsprodukten, insbesondere ein Gipsstaub aus der Bearbeitung von Gipsfaserplatten und/oder zerkleinerte Gipsfaserplatten und/oder Gipsschlamm, zugesetzt wird.

13. Verfahren nach Anspruch 12, **dadurch gekennzeichnet, dass** der Gipsfasersuspension (19) mit dem Gipsabfall wenigstens eine Dicarbonsäure, bevorzugt Bernsteinsäure, oder deren Salz zugesetzt wird.

14. Verfahren nach einem der Ansprüche 10 bis 13, **dadurch gekennzeichnet, dass** der Zusatz in dem als Druck-Rührbehälter ausgebildeten Druckbehälter (12) erfolgt.

15. Verfahren nach einem der vorangehenden Ansprüche, **dadurch gekennzeichnet, dass** die Gipsfasersuspension (19) nach der Umwandlung einem Prozess zur Herstellung von Gipskartonplatten und/oder Gipsfaserplatten zugeführt wird oder, insbesondere nach einem Abkühl- und/oder Entwässerungs- und/oder Trocknungsvorgang, zur späteren Verwendung gelagert wird.

## Claims

1. Process for recycling gypsum plasterboard material (1) comprising calcium sulfate dihydrate, comprising the following steps:
- introducing the gypsum plasterboard material (1) together with water (2) into a wet dissolver unit, specifically a pulper (3), and dissolving the gypsum plasterboard material (1) in the wet dissolver unit to produce a gypsum fibre suspension (19), and
- transforming the calcium sulfate dihydrate of the gypsum fibre suspension (19) into calcium sulfate alpha-hemihydrate in a pressure vessel (12), wherein the gypsum fibre suspension (19) is heated in the pressure vessel (12) and the heated gypsum fibre suspension (19) is held at the heating temperature.

2. Process according to Claim 1, **characterized in that** the gypsum plasterboard material (1) is introduced gravimetrically into the wet dissolver unit in such a way as to form a mixture of 30 to 60 wt% gypsum plasterboard material (1) with 40 to 70 wt% water (2), and/or **in that** the gypsum plasterboard material (1) is kept in the wet dissolver unit for a dissolution time of 10 to 20 minutes, preferably 14 to 16 minutes.

3. Process according to Claim 1 or 2, **characterized in that** a high-consistency pulper (3) is used as wet dissolver unit and/or a stirring device having comminuting teeth is used in the wet dissolver unit.

4. Process according to any of the preceding claims, **characterized in that** in the case of a gypsum plasterboard material (1) containing at least one contaminant, the gypsum fibre suspension (19) from the wet dissolver unit is passed through at least one contaminants separator.

5. Process according to Claim 4, **characterized in that** the at least one contaminants separator is selected from the group encompassing a disk screen (8), a heavies separator (9) and a cylinder screen (10).

6. Process according to Claim 4 or 5, **characterized in that** at least one of the at least one contaminants separator comprises a sieve with rotor that additionally comminutes larger gypsum particles.

7. Process according to any of Claims 4 to 6, **characterized in that** for contaminants separation contaminant particles larger than 10 mm are removed in a first stage in a coarse screen, more particularly the disk screen (8), having a sieve and/or a washing drum, after which heavy portions of the contaminant are removed by the heavies separator (9) in a second stage, and in a third stage contaminant particles larger than 2 mm are removed by means of a or the cylinder screen (10).

8. Process according to any of Claims 4 to 7, **characterized in that** the gypsum fibre suspension (19) prior to passage through the at least one contaminants separator is diluted to a solids content of 10 to 25 wt%.

9. Process according to any of the preceding claims, **characterized in that** the gypsum fibre suspension (19) from the pulper (3) is passed through at least one wet comminutor (11), more particularly a wet comminutor (11) which reduces the particle size to values smaller than one millimetre.

10. Process according to any of the preceding claims, **characterized in that** the gypsum fibre suspension (19) is admixed with at least one additional gypsum (13) and/or at least one additive (14) prior to the transformation into calcium sulfate alpha-hemihydrate.

11. Process according to Claim 10, **characterized in that** 10 to 80 wt% of flue gas desulfurization gypsum and/or natural gypsum and/or chemical gypsum, more particularly citric acid gypsum, based on the total gypsum fraction is added as additional gypsum (13) to the gypsum fibre suspension (19).

12. Process according to Claim 10 or 11, **characterized in that** at least one gypsum waste from the processing of gypsum products, more particularly a gypsum dust from the machining of gypsum fibreboard and/or comminuted gypsum fibreboard and/or gypsum slurry, is added as additional gypsum (13) to the gypsum fibre suspension (19).

13. Process according to Claim 12, **characterized in that** at least one dicarboxylic acid, preferably succinic acid, or salt thereof is added to the gypsum fibre suspension (19) with the gypsum waste.

14. Process according to any of Claims 10 to 13, **characterized in that** the addition is made in the pressure vessel (12) embodied as a pressure stirring vessel.

15. Process according to any of the preceding claims, **characterized in that** the gypsum fibre suspension (19) after the transformation is passed to an operation for producing gypsum plasterboard and/or gypsum fibreboard or is stored for later use, in particular after a cooling and/or dewatering and/or drying procedure.

## Revendications

1. Procédé de recyclage d'un matériau de placoplâtre contenant du sulfate de calcium dihydraté (1), ledit procédé comprenant les étapes suivantes :
- introduire le matériau de placoplâtre (1) conjointement avec de l'eau (2) dans une unité de dissolution par voie humide, à savoir un pulpeur (3), et dissoudre le matériau de placoplâtre (1) dans l'unité de dissolution par voie humide pour produire une suspension de fibres de plâtre (19), et
- convertir le sulfate de calcium dihydraté de la suspension de fibres de plâtre (19) en sulfate de calcium alpha semi-hydraté dans un récipient sous pression (12), la suspension de fibres de plâtre (19) étant chauffée dans le récipient sous pression (12) et la suspension de fibres de plâtre chauffée (19) étant maintenue à la température de chauffage.

2. Procédé selon la revendication 1, **caractérisé en ce que** le matériau de placoplâtre (1) est introduit par gravimétrie dans l'unité de dissolution par voie humide de manière à obtenir un mélange de 30 à 60 % en poids de matériau de placoplâtre (1) comprenant 40 à 70 % en poids d'eau (2) et/ou à maintenir le matériau de placoplâtre (1) dans l'unité de dissolution par voie humide pendant un temps de dissolution de 10 à 20 minutes, de préférence de 14 à 16 minutes.

3. Procédé selon la revendication 1 ou 2, **caractérisé en ce qu'**un pulpeur à haute consistance (3) est utilisé comme unité de dissolution par voie humide et/ou un dispositif d'agitation à dents broyeuses est utilisé dans l'unité de dissolution par voie humide.

4. Procédé selon l'une des revendications précédentes, **caractérisé en ce que**, dans le cas d'un matériau de placoplâtre (1) contenant au moins un contaminant, la suspension de fibres de plâtre (19) issue de l'unité de dissolution par voie humide est passée à travers au moins un séparateur de contaminants.

5. Procédé selon la revendication 4, **caractérisé en ce que** l'au moins un séparateur de contaminants est choisi dans le groupe comprenant un trieur à disques (8), un séparateur de matières lourdes (9) et un trieur à cylindres (10).

6. Procédé selon la revendication 4 ou 5, **caractérisé en ce qu'**au moins un de l'au moins un séparateur de contaminants comprend un crible à rotor broyant en plus des grains de plâtre plus gros.

7. Procédé selon l'une des revendications 4 à 6, **caractérisé en ce que** dans un premier étage d'un trieur grossier, notamment le trieur à disques (8), comprenant un crible et/ou un tambour de lavage, des particules de contaminant supérieures à 10 mm sont éliminées pour séparer le contaminant, puis dans un deuxième étage les parties lourdes du contaminant sont éliminées par le séparateur de matières lourdes (9) et dans un troisième étage les particules de contaminant supérieures à 2 mm sont éliminées au moyen d'un trieur à cylindre (10).

8. Procédé selon l'une des revendications 4 à 7, **caractérisé en ce que** la suspension de fibres de plâtre (19) est diluée à une teneur en matières solides de 10 à 25 % en poids avant passage à travers l'au moins un séparateur de contaminants.

9. Procédé selon l'une des revendications précédentes, **caractérisé en ce que** la suspension de fibres de plâtre (19) provenant du pulpeur (3) est guidée à travers au moins un broyeur par voie humide (11), notamment un broyeur par voie humide (11) qui réduit la taille des particules à des valeurs inférieures à un millimètre.

10. Procédé selon l'une des revendications précédentes, **caractérisé en ce qu'**au moins un plâtre additionnel (13) et/ou au moins un additif (14) sont ajoutés à la suspension de fibres de plâtre (19) avant la conversion en sulfate de calcium alpha semi-hydraté.

11. Procédé selon la revendication 10, **caractérisé en ce que** 10 à 80 % en poids de plâtre de désulfuration de gaz des fumées et/ou de plâtre naturel et/ou de plâtre chimique, notamment de plâtre à l'acide citrique, rapportés au pourcentage de plâtre total sont ajoutés comme gypse supplémentaire (13) à la suspension de fibres de plâtre (19).

12. Procédé selon la revendication 10 ou 11, **caractérisé en ce qu'**au moins un rebut de plâtre provenant du traitement de produits à base de plâtre, en particulier une poussière de plâtre provenant du traitement de panneaux de fibres de plâtre et/ou de panneaux de fibres de plâtre broyés et/ou de pulpe de plâtre est ajouté comme plâtre supplémentaire (13) à la suspension de fibres de plâtre (19).

13. Procédé selon la revendication 12, **caractérisé en ce qu'**au moins un acide dicarboxylique, de préférence l'acide succinique, ou un de ses sels, est ajouté à la suspension de fibres de plâtre (19) comprenant le rebut de plâtre.

14. Procédé selon l'une des revendications 10 à 13, **caractérisé en ce que** l'ajout est effectué dans le réservoir sous pression (12) conçu comme un réservoir à agitation sous pression.

15. Procédé selon l'une des revendications précédentes, **caractérisé en ce que** la suspension de fibres de plâtre (19) est amenée après la conversion à un processus de production de placoplâtre et/ou de plaques de fibres de plâtre ou, en particulier est stockée après un processus de refroidissement et/ou de déshydratation et/ou de séchage, en vue d'une utilisation ultérieure.
